# EUROPÄISCHE PATENTSCHRIFT

(11) **EP 1 758 776 B1**
(45) Veröffentlichungstag und Bekanntmachung des Hinweises auf die Patenterteilung: **18.11.2009**
(21) Anmeldenummer: 05756904.8
(22) Anmeldetag: 22.06.2005
(51) Int. Cl.: B60T 8/26, B60K 6/00, B60T 13/58

(54) **VERFAHREN ZUR STEUERUNG EINES BREMSSYSTEMS EINES ALLRADGETRIEBENEN KRAFTFAHRZEUGES**
METHOD FOR CONTROLLING THE BRAKING SYSTEM OF A FOUR-WHEEL DRIVE MOTOR VEHICLE
PROCEDE DE COMMANDE D'UN SYSTEME DE FREINAGE D'UN VEHICULE A TRANSMISSION INTEGRALE

(30) Priorität: 24.06.2004 DE 102004030642
(43) Veröffentlichungstag der Anmeldung: 07.03.2007
(73) Patentinhaber: Continental Teves AG & Co. oHG, 60488 Frankfurt (DE)
(72) Erfinder: FÜHRER, Jochen, 64287 Darmstadt (DE); KIENLE, Lothar, 68623 Lampertheim (DE); SCHMITT, Gregor, 65929 Frankfurt (DE)
(86) Internationale Anmeldenummer: PCT/EP2005/052902
(87) Internationale Veröffentlichungsnummer: WO 2006/000560

(56) Entgegenhaltungen:
- EP-A- 0 361 708
- US-A1- 2002 180 266
- US-B1- 6 325 470
- US-B1- 6 457 784

## Beschreibung

Die Erfindung betrifft ein Verfahren zur Steuerung eines Bremssystems eines allradgetriebenen Kraftfahrzeuges, das eine elektrisch-regenerative Bremse, insbesondere einen Generator, und eine Anzahl von Reibbremsen aufweist, dessen Gesamtbremsmoment sich aus Bremsmomentanteilen der Reibbremsen und der elektrisch-regenerativen Bremse zusammensetzt und das Bremsmoment der elektrisch regenerativen Bremse in vorbestimmten Verhältnissen auf Vorder- und Hinterachse aufgeteilt ist, wobei das von der elektrisch-regenerativen Bremse aufgebrachte Bremsmoment derart begrenzt wird, dass ein wählbarer maximaler Bremsschlupf einer Achse des Kraftfahrzeuges, nicht überschritten wird.

Der Zweck von regenerativen Bremssystemen bei Kraftfahrzeugen besteht darin, zumindest einen Teil der beim Bremsen aufgebrachten Energie im Kraftfahrzeug zu speichern und für den Antrieb des Kraftfahrzeuges wieder zu verwenden. Dadurch kann der Energieverbrauch des Kraftfahrzeuges insgesamt gesenkt, der Wirkungsgrad erhöht und der Betrieb damit wirtschaftlicher gestaltet werden. Kraftfahrzeuge mit einem regenerativen Bremssystem weisen dazu in der Regel verschiene Arten von Bremsen auf, die auch Bremsaktuatoren genannt werden.

Dabei werden in der Regel hydraulische Reibbremsen, wie sie aus gewöhnlichen Kraftfahrzeugen bekannt sind, und eine elektrisch-regenerative Bremse eingesetzt. Der Bremsdruck für die Reibbremsen wird wie bei konventionellen Reibbremsen über ein Bremsdruckerzeugungsmittel bzw. über die Bremspedalbewegung aufgebracht. Die elektrisch-regenerative Bremse ist in der Regel als elektrischer Generator ausgebildet, über den zumindest ein Teil der gesamten Bremsleistung aufgebracht wird. Die gewonnene elektrische Energie wird in ein Speichermedium wie beispielsweise eine Bordbatterie ein- oder zurückgespeist und für den Antrieb des Kraftfahrzeuges über einen geeigneten Antrieb wieder verwendet.

Regenerative Bremssysteme können als so genannte serielle regenerative Konzepte ausgeführt werden, bei denen der Anteil des Bremsmomentes, der vom Generator aufgebracht wird, möglichst hoch ist. Dagegen sind auch parallele oder so genannte Schleppmoment-basierte regenerative Konzepte bekannt, bei denen das Bremsmoment auf die Bremsaktuatoren in vorbestimmten Verhältnissen aufgeteilt wird. Weiterhin sind Mischkonzepte dieser beiden Bremskonzepte bekannt. Allen Systemen gemeinsam ist, dass zumindest in einiger. Bereichen des aufzubringenden Bremsmomentes mit mehreren Bremsaktuatoren gleichzeitig gebremst wird, so dass sich die Gesamtverzögerung aus den Verzögerungsanteilen der Bremsaktuatoren zusammensetzt.

Bei der Realisierung regenerativer Bremssysteme wird ein Kraftfahrzeug an einer Anzahl von Achsen oder üblicherweise auch an allen Achsen des Kraftfahrzeuges mit Reiboremsen verzögert, indem jedes Rad der entsprechenden Achse mit einer Reibbremse versehen ist. Je nach Auslegung des Kraftfahrzeugs als Allradfahrzeug oder auch als Einzelachsen-getriebenes Fahrzeug ist der elektrische Generator in der Regel ebenfalls mit beiden Fahrzeugachsen oder auch nur mit einer Achse des Kraftfahrzeuges verbunden, so das nur über diese Achse regeneratives Bremsmoment aufgebracht werden kann. Die letztgenannte Anordnung weist dabei einen vergleichsweise hohen Wirkungsgrad auf, da die wirkungsgradmindernde Reibung nur auf eine der Achsen begrenzt ist.

Alternativ zu diesem Konzept lässt sich auch ein so genanntes Allradkonzept realisieren, bei dem der Generator mit beiden Achsen verbunden ist. Diese Alternative weist allerdings aufgrund der höheren Reibung einen schlechteren Wirkungsgrad auf, so dass sie kaum realisiert wird. Bei Kraftfahrzeugen, die jedoch ohnehin als allradgetriebene Kraftfahrzeuge ausgelegt sind, ist der Generator, wie oben beschrieben, üblicherweise mit beiden bzw. allen Achsen des Allradkraftfahrzeuges verbunden. Durch die Konfiguration des Antriebsstranges bei einem Allradkraftfahrzeug bei dem ein regeneratives Bremssystem verwendet wird, ist in der Regel eine fest vorgegebene Aufteilung von Bremsmoment zwischen Vorder- und Hinterachse vorgegeben. Dieses weist bei einem Allradkraftfahrzeug mit zwei Achsen üblicherweise ein Bremsmomentverhältnis von etwa 50%/50% bis zu 30%/70% von Vorderzu Hinterachse auf.

Nachteilig an einer derartigen Bremssystemkonfiguration ist, dass bei einer zumindest anteilig regenerativen Bremsung keine ideale Bremskraftverteilung vorliegt. So kann es insbesondere bei seriellen regenerativen Konzepten, aber auch bei parallelen und Mischkonzepten dazu führen, dass eine Achse des Kraftfahrzeuges anteilig stärker verzögert wird als die anderen Achsen, indem ein erheblicher Teil des Gesamtbremsmoments von dem Generator bedingt durch das vergebene Bremsmomentverhältnis an einer Achse aufgebracht wird. Dieser Effekt wird auch Überbremsen genannt. Beim Überbremsen einer Achse werden die anderen Achsen bzw. die andere Achse unterbremst.Bei Allradkraftfahrzeugen mit zwei Achsen kann es daher zum vorderen oder hinteren Überbremsen des Kraftfahrzeuges kommen, je nachdem wie die Bremsmomentverteilung zwischen Vorder- und Hinterachse des Generators vorgesehen ist, während die jeweils andere Achse unterbremst wird.

Nachteilig und problematisch beim Überbremsen ist, dass die überbremsten Räder schneller in Schlupf geraten können als die anderen. Dies kann dazu führen, dass durch den Radschlupf eine ABS (Anti-Blockier-System)- Bremsung ausgelöst werden kann. Diese führt zu einer vollständigen Reduzierung des regenerativen Bremsmoments, so dass sich nach kurzer ABS-Bremsung wieder eine Normalbremsung, nur mit Reibbremsen einstellt, bei der die Bremskraftverteilung verbessert bzw. ausgeglichener ist. Dieser Vorgang führt zu einem instabilen Bremsgefühl des Fahrers. Besonders nachteilig und unangenehm für den Fahrer wirken sich dieser beschriebene Bremseffekt, bei dem durch das Überbremsen an einer Achse eine ABS-Bremsungen auftritt, bei Kurvenfahrten und hohen Verzögerungswerten aus.

Aus der US 6,457 784 B1 ist ein Verfahren zum Ermitteln von Sollwerten für Bremskräfte oder -momente einer Bremsanlage eines Fahrzeugs bekannt das elektrisch angetrieben werden kann, wobei die Bremskräfte oder -momente nach Maßgabe von entsprechenden Sollwerten durch eine auf alle Räder eines Fahrzeugs einwirkende Reibbremse und eine auf zumindest eine Achse einwirkende elektrisch-regenerative Bremse erzeugt werden können. Das vorbekannte Verfahren sieht vor, dass ein Ermitteln einer Sall-Fahrzeuverzögerung aus einem ermittelten Verzögerungswunsch, und ein Ermitteln der Sollwerte nach Maßgabe der Soll-Fahrzeugverzögerung durchgeführt werden. Nach Maßgabe des Verzögerungsswunsches wird entweder der Sollwert für die elektrisch-regenerative Bremse größtmöglich gemacht oder die Sollwerte für die elektrisch-regenerative Bremse und für die Reibbremse werden primär nach Maßgabe von Kriterien betreffend die Bremskraftverteilung an den Achsen eingestellt.

Außerdem ist aus der US 2002/0180266 A1 ist ein verfahren zur Steuerung eines Bremssystems eines Kraftfahrzeuges bekannt das eine elektrisch-regenerative Bremse und eine Anzahl von Reibbremsen aufweist.

Der Erfindung liegt daher die Aufgabe zugrunde, ein Verfahren für die Steuerung eines regenerativen Bremssystems eines allradgetriebenen Kraftfahrzeuges anzugeben, bei dem sich eine besonders hohe Stabilität eines Bremsvorgangs erreichen lässt und die Bremsleistung erhöht wird.

Diese Aufgabe wird erfindungsgemäß gelöst, dass ab einem wählbaren maximalen Bremsschlupf einer Achse, das Bremsmoment der Reibbremsen an den oder der jeweils anderen Achse erhöht wird. Durch diese Maßnahme wird das Problem gelöst, dass wenn das elektrisch-regenerative Bremsmoment aufgrund des Schlupfes einer Achse reduziert wird, gleichzeitig das Bremsmoment der Reibbremsen an den oder der jeweils anderen Achse erhöht wird. Damit wird mit maximaler Bremskapazität gebremst ohne dass ein Schlupf auftritt.

Die Erfindung geht dabei von der Überlegung aus, dass bei der Auslegung eines regenerativen Bremssystems mit einer Anzahl von Reibbremsen und einer elektrisch-regenerativen Bremse für ein allradgetriebenes Kraftfahrzeuges, grundsätzlich ein Zielkonflikt zwischen einer möglichst hohen Energierückgewinnung mit einem hohen Anteil von elektrisch-regenerativem Bremsmoment einerseits, und einer hohen Stabilität des Bremsvorgangs andererseits besteht. Dabei ist problematisch, dass sich bei einer Erhöhung des regenerativen Bremsmomentanteils die Bremskraftverteilung zugunsten derjenigen Achse verschiebt, über die der größere Anteil des regenerativen Bremsmomentes aufgebracht wird, und diese Achse überbremst werden kann.

Selbst bei vergebenen Sollbremsmomentanteilen zwischen den Reibbremsen und der elektrisch regenerativen Bremse kann aufgrund des im Geschwindigkeitsverlauf variierenden Wirkungsgrades der elektrisch-regenerativen Bremse eine derart ungünstige Bremsmomentverteilung auftreten, dass eine Achse des Kraftfahrzeuges überbremst wird und in Schlupf gerät.

Eine ABS-Bremsung, die durch erhöhten Schlupf an einer überbremsten Achse auftritt, tritt bei einer niedrigeren Verzögerungsbeschleunigung auf, als eine ABS-Bremsung, bei der keine Überbremsung vorliegt bzw. bei der die Bremskraftverteilung zwischen den Achsen ausgeglichen ist. Um den Zielkonflikt zwischen einem hohen Bremskomfort und einer hohen Energierückgewinnung zu optimieren, sollte das Bremsmoment der elektrisch-regenerativen Bremse derart begrenzt werden, dass ein wählbarer maximaler Bremsschlupf einer Achse nicht überschritten wird.

Um beim Erreichen eines maximalen Bremsschlupfes an einer Achse einen Ausgleich der Bremskraftverteilung zu gewährleisten, und damit eine Überbremsung und eine bei einer zu niedrigen Verzögerungsbeschleunigung einsetzende ABS-Bremsung zu vermeiden, wird das Bremsmoment der elektrisch-regenerativen Bremse vorteilhafterweise ab dem wählbaren maximalen Bremsschlupf reduziert. Ein Überbremsen einer Achse wird daher ab diesem Bremsschlupf, der als oberer Grenzwert fungiert, vermieden.

Um bei einer Überschreitung des Grenzwertes weiterhin Bremsmoment über die elektrisch regenerative Bremse aufbringen zu können und damit eine hohe Energierückgewinnung zu erreichen, wird das Bremsmoment der elektrisch-regenerativen Bremse ab dem wählbaren maximalen Bremsschlupf einer Achse zweckmäßigerweise kontinuierlich reduziert.

Für eine Kompensation von reduziertem Bremsmoment der elektrisch-regenerativen Bremse, wird vorzugsweise ab einem wählbaren maximalen Bremsschlupf einer Achse das Bremsmoment der Reibbremsen an den oder der jeweils anderen Achse erhöht. Bei einem zweiachsigen allradgetriebenen Kraftfahrzeug wird bei einer Reduktion des Bremsmomentes der elektrisch-regenerativen Bremse, wenn die Hinterachse einen maximalen Bremsschlupf erreicht hat bzw. die Gefahr droht zu Überbremsen, das Bremsmoment der Reibbremsen der Vorderachse erhöht, um das nachgeftragte Gesamtsollbremsmoment aufrecht zu erhalten.

Vorteihafterweise wird dabei eine Umverteilung des Bremsmomentes zwischen den Achsen durchgeführt, so dass Bremsmoment von der Achse an dem der anliegende Bremsschlupf einen maximalen Bremsschlupf erreicht hat, zu der bzw. den jeweils anderen Achsen verlagert wird. Dazu wird das Bremsmoment der elektrisch-regenerativen Bremse, die mit allen Achsen bzw. bei einem zweiachsigen Kraftfahrzeug mit beiden Achsen verbunden ist, reduziert und gleichzeitig das Bremsmoment der Reibbremsen an der jeweils anderen bzw. den anderen Achsen erhöht.

Damit sich bei einer Umverteilung von Bremsmoment wieder eine vergleichsweise stabilere Bremssituation bzw. eine Bremssituation mit einem reduzierten Bremsschlupf einstellt, wird das Bremsmoment der elektrisch regenerativen Bremse vorzugsweise ab dem wählbaren Grenzwert derart reduziert, dass sich die Bremskraftverteilung der Achsen des Kraftfahrzeuges zweckmäßigerweise vorbestimmten Sollwerten annähert. Dabei können die Sollwerte gerade insbesondere so gewählt sein, dass keine frühzeitigen ABS-Bremsungen durch ein Überbremsen auftreten.

Um zu Vermeiden, dass eine Achse des allradgetriebenen Kraftfahrzeuges in Schlupf gerät, ohne das Bremsmoment der elektrisch-regenerativen Bremse zu reduzieren, wird vorzugsweise, ab einem wählbaren maximalen Bremsschlupf einer Achse, das anliegende Bremsmoment dieser Achse konstant gehalten. Dabei wird ein maximaler Bremsschlupf so gewählt, dass sich die entsprechende Achse gerade nicht im Schlupf befindet. Wenn das angeforderte Gesamtbremsmoment weiter ansteigt, wird das Bremsmoment der Reibbremsen der anderen bzw. der anderen Achsen erhöht.

Für eine möglichst hohe Stabilität eines Bremsvorganges, wird ab einem wählbaren maximalen Bremsschlupf einer Achse, vorteilhafterweise in Abhängigkeit der Bremssituation entweder das Bremsmoment der elektrisch-regenerativen Bremse reduziert oder das anliegende Bremsmoment dieser Achse konstant gehalten. Dabei können die für diese Alternativentscheidung Parameter wie die Geschwindigkeit und Beschleunigung des Kraftfahrzeuges, sowie der Bremsschlupf und die Bremsschlupfveränderung verwendet werden.

Für einen mit der Geschwindigkeit des Kraftfahrzeuges variierenden Wirkungsgrad der elektrisch-regenerativen Bremse oder der Reibbremsen, wird eine derartige Abweichung mit einer Korrekturfunktion kompensiert. Dazu wird die Sollverzögerung einer Anzahl von Reibbremsen oder die Sollverzögerung einer elektrisch-regenerativen Bremse, über die Ermittlung des anliegenden Wirkungsgrades, mit einem Korrekturfaktor beaufschlagt. Der Wirkungsgrad stellt dabei das Verhältnis von Ist- zur Sollverzögerung dar.

Vorteilhafterweise weist ein regeneratives Bremssystem eines allradgetriebenen Kraftfahrzeuges eine Steuereinheit auf, über die das Bremssystem mit einem oben beschriebenen Verfahren steuerbar ist.

Die mit der Erfindung erzielbaren Vorteile bestehen insbesondere darin, dass sich durch das oben beschriebene Verfahren die Stabilität des Kraftfahrzeuges beim Abbremsen durch eine Annäherung des Bremsverhaltens an eine ideale Bremskraftverteilung erhöht. Dadurch kann insbesondere auch verhindert werden, dass durch Überbremsen Räder einzelner Achsen die regenerative Bremsung durch eine ABS-Bremsung abbricht. Dadurch kann auch der Verzögerungsbereich, indem eine regenerative Bremsung einsetzt wird, vergrößert werden, so dass eine höhere Energierückgewinnung erreicht werden kann. Mit dem Verfahren lässt sich ein guter Kompromiss zwischen einer hohen Fahrstabilität und einer möglichst hohen Energierückgewinnung ermöglichen, indem die regenerative Bremsung nicht bis zu einem Überbremsen einer Achse durchgeführt wird, sondern der Bremsmomentanteil der elektrisch-regenerativen Bremse entsprechend reduziert oder begrenzt wird. Eine eventuelle auftretende ABS-Bremsung findet so auch erst dann statt, wenn sie bei einer reinen Bremsung mit Reibbremsen auch auftreten würde.

Ein Ausführungsbeispiel wird anhand einer Zeichnung näher erläutert. Darin zeiget:
- Figur 1: ein Bremssystem 1,
- Figur 2: ein Diagramm mit der Verteilung des Bremsmomentes zwischen Vorderachse M_{VA} und Hinterachse M_{VH} des Bremssystems 1 nach Figur 1 bei einem Bremsvorgang mit den Punkten A bis I, und
- Figur 3: den Bremsmomentverlauf eines elektrischen Generators 4 des Bremssystem 1 nach Figur 1.

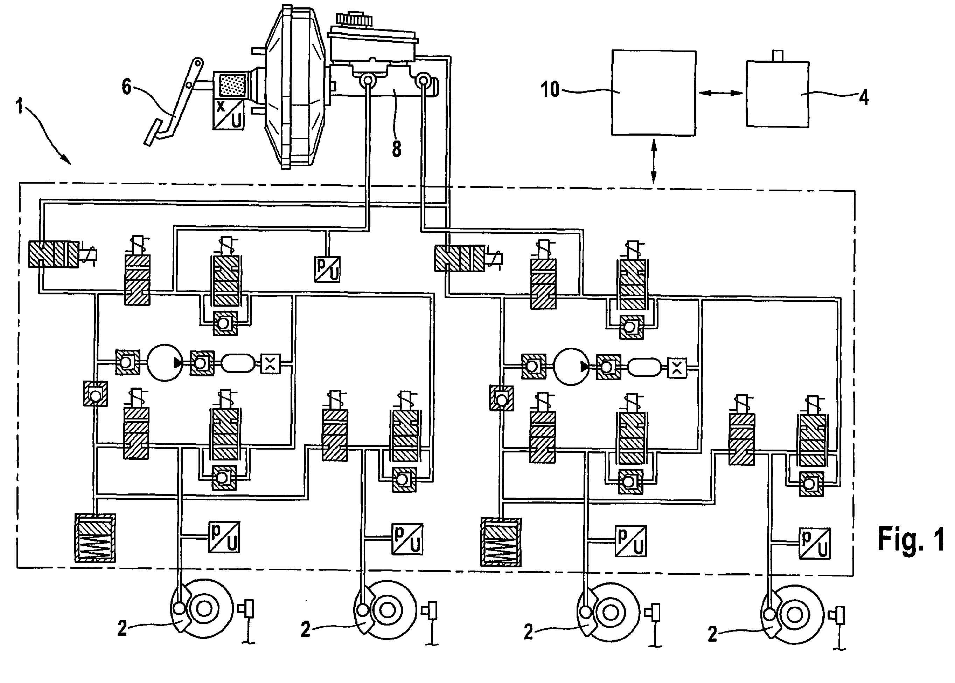

Das Ausführungsbeispiel betrifft ein Verfahren zur Steuerung eines regenerativen Bremssystems 1 eines allradgetriebenen Kraftfahrzeuges mit zwei Achsen. Das Bremssystem 1 weist, wie sich aus Figur 1 entnehmen lässt, an allen vier Rädern eine Reibbremse 2, und zur Rückgewinnungewinnung elektrischer Energie einen elektrischen Generator 4 auf. Wie aus Figur 1 nicht näher zu entnehmen ist, ist der Generator 4 mit beiden Achsen des Kraftfahrzeuges verbunden und weist aufgrund der Allradkonfiguration des Antriebsstranges eine feste Aufteilung von Bremsmoment zwischen Hinter- und Vorderachse von 70% zu 30 % auf.

Das Bremssystem 1 ist als ein elektro-hydraulisches Bremssystem ausgelegt, bei dem das angeforderte Bremsmoment bzw. der Bremswunsch am Bremspedal 6 ermittelt wird. Dieses Bremsmoment wird dann sowohl über die Reibbremsen 2 als auch über den elektrischen Generator 4 umgesetzt, wobei das Bremssystem 1 insbesondere dafür ausgelegt ist, einen möglichst großen Anteil der Bremsenergie über den elektrischen Generator 4 aufzubringen. Die Aufteilung des Bremsmomentes in einen regenerativen Anteil über den Generator 4 und einen Anteil der Reibbremsen 2 wird über die Steuereinheit 10 vorgenommen .

Die Ansteuerung des Generators 4 erfolgt elektronisch, während der erforderliche Bremsdruck für die Reibbremsen 2 über den Hauptbremszylinder 8 aufgebaut wird. Die Höhe des sich ergebenden Bremsmomentes ist dabei über eine geeignete Ventilsteuerung bezüglich der Achsen steuerbar, so dass eine für eine Bremssituation geeignetes Bremsmomentverhältnis zwischen den Achsen einstellbar ist. Die Einstellung dieses Bremsmomentverhältnisses wird im folgenden näher erläutert.

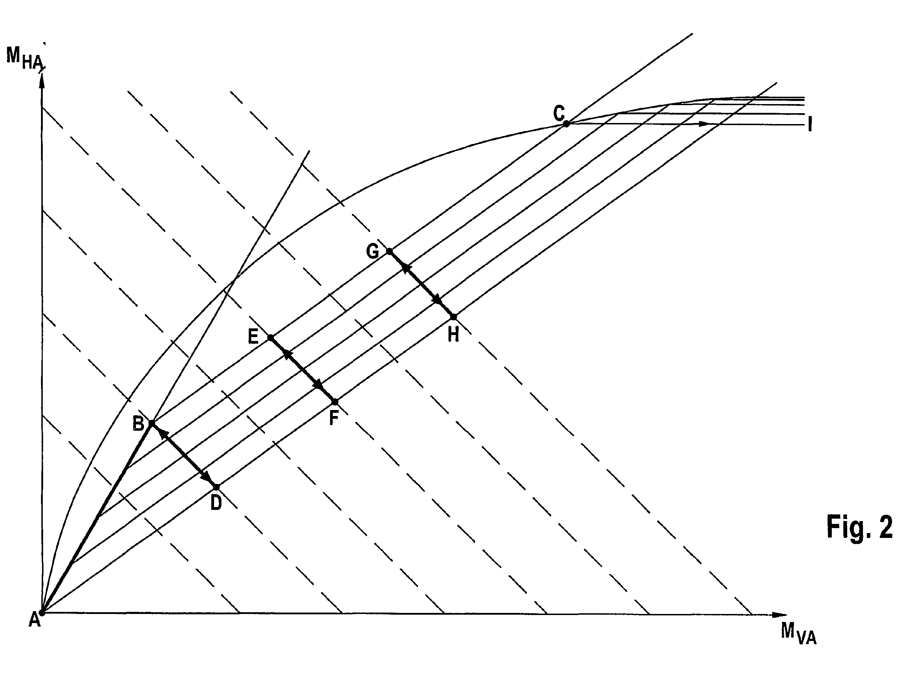

In Figur 2 ist ein Diagramm mit der Verteilung des Bremsmomentes zwischen der Vorderachse M_{VA} und der Hinterachse M_{VH} des Bremssystems 1 beispielhaft an einem Bremsvorgang mit den Zuständen A bis I dargestellt. Bei Zustand A beginnt der Bremsvorgang durch Betätigung des Bremspedals 6. Dabei wird zunächst das gesamte Bremsmoment mit dem Generator 4 aufgebracht, so dass sich bei ansteigender Bremsmomentnachfrage die Bremsmomentverteilung gemäß dem Verhältnis von 70% zu 30% von Hinter- zu Vorderachse von Punkt A zu Punkt B verschiebt. Zustand B kennzeichnet dabei den Zustand des maximal möglichen Generatorbremsmomentes bei der aktuell anliegenden Geschwindigkeit.

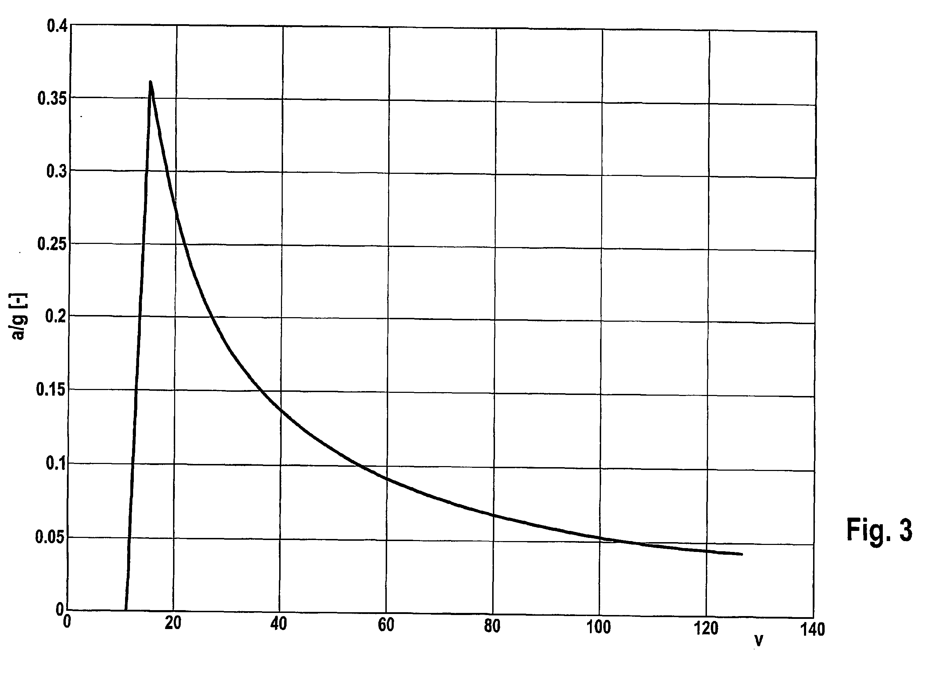

Wenn die Bremsmomentanforderung das maximal mögliche Generatorbremsmoment überschreitet, wird das zusätzliche benötigte Bremsmoment von den Reibbremsen 2 aufgebracht. Die Bremsmomentverteilung befindet sich dann auf der Geraden zwischen den Punkten B und C, wobei sich die Steigung der Geraden zwischen B und C aus der Auslegung der Reibbremsen ergibt, wobei diverse Fahrzeugparameter wie beispielsweise der Radstand und die Schwerpunktlage mit einfließen.
Wie sich aus Figur 3 ergibt, ist das Bremsmoment, welches über den elektrischen Generator 4 aufgebracht wird, aufgrund des variierenden Wirkungsgrades des Generators 4 geschwindigkeitsabhängig. Das Bremssystem 1 wird daher über die Steuereinheit 10 ständig eingeregelt, indem bei einem Abfallen des maximalen Generatorbremsmomentes entsprechend zusätzliches Bremsmoment der Reibbremsen 2 angefordert wird, wobei der Anteil des Generators 4 am Gesamtbremsmoment möglichst hoch gehalten wird. Die Bremsmomentverteilung bewegt sich dann bezüglich der Geraden zwischen den Punkten A und C nach unten rechts, wobei ein solcher geschwindigkeitsabhängiger Übergang exemplarisch anhand der Geraden zwischen den Punkten B und D, E und F, und G und H dargestellt ist.

Das Verfahren ist weiterhin dafür ausgelegt, eine möglichst hohe Bremsstabilität sicherzustellen. Dafür wird das Bremssystem 1 mit dem Verfahren derart gesteuert, dass verhindert wird, dass eine Achse vorzeitig in Schlupf gerät bzw. überbremst wird. Hierbei wird insbesondere berücksichtigt, dass je nach Fahrbahnbeschaffenheit, aufgrund des aktuellen Fahrbahnreibwertes, lediglich ein bestimmtes maximales Bremsmoment auf die Fahrbahn übertragen werden kann. Um ein Überschreiten eines maximal zulässigen Bremsschlupfes an einer Achse zu verhindern, sieht das Verfahren zwei unterschiedliche Strategien vor, die alternativ bremssituationsabhängig eingesetzt werden. Dabei wird immer diejenige Strategie eingesetzt, die bei der aktuellen Fahr- bzw. Bremssituation die besten Ergebnisse liefert. Gemeinsam an beiden Strategien ist, dass ab dem Erreichen eines maximalen Bremsschlupfes einer Achse eine achsweise Bremsmomentumverteilung vorgenommen wird.

Wie in Figur 2 dargestellt ist, wird bei der ersten Strategie, wenn beispielsweise die hinteren Räder einen maximal zulässigen Bremsschlupf überschreiten, eine sprunghafte Verringerung des Generatorbremsmomentes vorgenommen und dieses reduzierte Bremsmoment über eine Erhöhung des Bremsmomentes M_{VA} der Reibbremsen 2 der Vorderachse kompensiert. In Figur 2 entspricht dies einer Bewegung auf den Geraden mit den Punkten B und D, E und F, und G und H nach unten rechts.

Die zweite Strategie sieht vor, bevor die Hinterachse in Schlupf gerät, also ab einem maximalen Bremsschlupf, das Bremsmoment der Hinterachse vorsorglich konstant zu halten. Dies entspricht einem Zustand auf der Geraden mit den Punkten C und I. Falls die Bremsmomentnachfrage den aktuell anliegenden Bremsdruck überschreitet, wird so lediglich das Bremsmoment M_{VA} der vorderen Reibbremsen 2 weiter erhöht, wobei sich das Bremsmomentverhältnis in Richtung zu Punkt I verschiebt.

Das Verfahren weist zur Korrektur von Abweichungen der Istzu den Sollverzögerungswerten der Reibbremsen 2 und dem Generator 4 eine Korrekturfunktion auf, wobei die jeweilige Sollverzögerung entsprechend dem anliegenden Wirkungsgrad, der dem Verhältnis von Ist- zur Sollverzögerung entspricht, mit einem geeigneten Korrekturfaktor beaufschlagt wird. Die Berechnung eines derartigen Korrekturfaktors wird über die Steuereinheit 10 durchgeführt.

### Bezugszeichenliste

- 1: Bremssystem
- 2: Reibbremse
- 4: Generator
- 6: Bremspedal
- 8: Hauptbremszylinder
- 10: Steuereinheit

## Patentansprüche

1. Verfahren zur Steuerung eines Bremssystems (1) eines allradgetriebenen Kraftfahrzeuges, das eine elektrisch-regenerative Bremse, insbesondere einen Generator (4), und eine Anzahl von Reibbremsen (2) aufweist:, dessen Gesamtbremsmoment sich aus Bremsmomentanteilen der Reibbremsen (2) und der elektrisch-regenerativen Bremse zusammensetzt und das Bremsmoment der elektrisch regenerativen Bremse in vorbestimmten Verhältnissen auf Vorder- und Hinterachse aufgeteilt ist, wobei das von der elektrisch-regenerativen Bremse aufgebrachte Bremsmoment derart begrenzt wird, dass ein wählbarer maximaler Bremsschlupf einer Achse des Kraftfahrzeuges, nicht überschritten wird, **dadurch gekennzeichnet, dass** ab einem wählbaren maximalen Bremsschlupf einer Achse, das Bremsmoment der Reibbremsen (2) an den oder der jeweils anderen Achse erhöht wird.

2. Verfahren nach Anspruch 1, **dadurch** gekenntzeichnet, dass ab einem wählbaren maximalen Bremsschlupf einer Achse, eine Umverteilung von Bremsmoment zur jeweils anderen oder den anderen Achsen durchgeführt wird.

3. Verfahren nach Anspruch 3, **dadurch gekennzeichnet, dass** eine Umverteilung von Bremsmoment solange durchgeführt wird, bis sich die Bremsmomentverteilung der Achsen des Kraftfahrzeuges einem vorbestimmten Sollwert annähert.

4. Verfahren nach Anspruch 1, **dadurch gekennzeichnet, dass** ab einem wählbaren maximalen Bremsschlupf einer Achse, das anliegende Bremsmoment dieser Achse konstant gehalten wird.

5. Verfahren nach Anspruch 1, **dadurch gekennzeichnet, dass** in Abhängigkeit der Bremssituation entweder ein Verfahren nach einem der Ansprüche 2 und 3 oder ein Verfahren nach Anspruch 4 durchgeführt wird.

6. Verfahren nach einem der Ansprüche 1 bis 5, **dadurch gekennzeichnet, dass** die Sollverzögerung einer Anzahl von Reibbremsen (2) oder die Sollverzögerung einer elektrisch-regenerativen Bremse, über die Ermittlung des anliegenden Wirkungsgrades, mit einem Korrekturfaktor beaufschlagt wird.

7. Bremssystem (1) eines Kraftfahrzeuges, das eine elektrisch-regenerative Bremse, insbesondere einen Generator (4), eine Anzahl von Reibbremsen (2) und eine Steuereinheit (6) aufweist, dessen Gesamtverzögerung sich aus Verzögerungsanteilen der Reibbremsen (2) und der elektrisch-regenerativen Bremse zusammensetzt,
**dadurch gekennzeichnet, dass** die Steuereinheit derartig augelegt ist, dass das Bremsystem gemäß dem Verfahren nach einem der Ansprüche 1 bis 6 gesteuert wird

## Claims

1. Method for controlling a braking system (1) of an all-wheel drive motor vehicle which has an electric regenerative brake, in particular a generator (4), and a number of friction brakes (2) whose total braking torque is composed of braking torque portions of the friction brakes (2) and of the electric regenerative brake, and the braking torque of the electric regenerative brake is distributed between the front axle and the rear axle according to predetermined ratios, wherein the braking torque which is applied by the electric regenerative brake is limited in such a way that a selectable maximum brake slip of one axle of the motor vehicle is not exceeded, **characterized in that**, starting from a selectable maximum braking slip of one axle, the braking torque of the friction brakes (2) at the axles or the respective other axle is increased.

2. Method according to Claim 1, **characterized in that**, starting from a selectable maximum braking slip of one axle, redistribution of braking torque to the respective other axle or the other axles is carried out.

3. Method according to Claim 3, **characterized in that** redistribution of braking torque is carried out until the distribution of braking torque of the axles of the motor vehicle approaches a predetermined setpoint value.

4. Method according to Claim 1, **characterized in that**, starting from a selectable maximum braking slip of one axle, the braking torque which is present at this axle is kept constant.

5. Method according to Claim 1, **characterized in that** either a method according to one of Claims 2 and 3 or a method according to Claim 4 is carried out as a function of the braking situation.

6. Method according to one of Claims 1 to 5, **characterized in that** a correction factor is applied to the setpoint deceleration of a number of friction brakes (2) or to the setpoint deceleration of an electric regenerative brake, by determining the efficiency level which is present.

7. Braking system (1) of a motor vehicle which has an electric regenerative brake, in particular a generator (4), a number of friction brakes (2) and a control unit (6), the total deceleration of which braking system (1) is composed of deceleration portions of the friction brakes (2) and of the electric regenerative brake, **characterized in that** the control unit is configured in such a way that the braking system is controlled in accordance with the method according to one of Claims 1 to 6.

## Revendications

1. Procédé de commande du système de freinage (1) d'un véhicule automobile à transmission intégrale qui présente un frein à régénération d'électricité, en particulier un générateur (4), et plusieurs freins à friction (2) dont le couple total de freinage est formé de fractions constituées des couples de freinage des freins à friction (2) et de celui du frein à régénération d'électricité, le couple de freinage du frein à régénération d'électricité étant réparti en proportions prédéterminées entre l'essieu avant et l'essieu arrière, le couple de freinage appliqué par le frein à régénération d'électricité étant limité de manière à ne pas dépasser un patinage maximum sélectionné de freinage sur un essieu du véhicule automobile,
**caractérisé en ce que**
à partir d'un patinage maximum sélectionné de freinage d'un essieu, le couple de freinage des freins à friction (2) est augmenté sur l'autre essieu ou sur chacun des autres essieux.

2. Procédé selon la revendication 1, **caractérisé en ce qu'**à partir d'un patinage maximum sélectionné de freinage d'un essieu, le couple de freinage est de nouveau réparti entre chaque autre essieu ou les autres essieux.

3. Procédé selon la revendication 3, **caractérisé en ce que** le couple de freinage est de nouveau réparti jusqu'à ce que la répartition des couples de freinage entre les essieux du véhicule s'approche d'une valeur de consigne prédéterminée.

4. Procédé selon la revendication 1, **caractérisé en ce qu'**à partir d'un patinage maximum sélectionné de freinage d'un essieu, le couple de freinage appliqué sur cet essieu est maintenu constant.

5. Procédé selon la revendication 1, **caractérisé en ce qu'**en fonction de la situation de freinage, il exécute un procédé selon l'une des revendications 2 et 3 ou un procédé selon la revendication 4.

6. Procédé selon l'une des revendications 1 à 5, **caractérisé en ce que** le ralentissement de consigne d'un certain nombre de freins à friction (2) ou le ralentissement de consigne d'un frein électrique à régénération est corrigé d'un facteur de correction par l'intermédiaire de la détermination du rendement appliqué.

7. Système (1) de freinage pour véhicule automobile qui présente un frein à régénération d'électricité, en particulier un générateur (4), plusieurs freins à friction (2) et une unité de commande (6), dont le ralentissement total est formé des fractions de ralentissement appliquées par les freins à friction (2) et par le frein à régénération d'électricité,
**caractérisé en ce que**
l'unité de commande est conçue de telle sorte que le système de freinage soit commandé à l'aide du procédé selon l'une des revendications 1 à 6.
